# EUROPÄISCHE PATENTSCHRIFT

(11) **EP 0 849 582 B1**
(45) Veröffentlichungstag und Bekanntmachung des Hinweises auf die Patenterteilung: **02.05.2003**
(21) Anmeldenummer: 97120425.0
(22) Anmeldetag: 21.11.1997
(51) Int. Cl.: G01N 1/31

(54) **Vorrichtung zur Behandlung von Objekten, insbesondere von zytologischen oder histologischen Präparaten**
Device for treating objects, particularly histological or cytological preparations
Dispositif de traitement d'objets, en particulier de préparations histologiques ou cytologiques

(30) Priorität: 17.12.1996 DE 19652339
(43) Veröffentlichungstag der Anmeldung: 24.06.1998
(73) Patentinhaber: Microm International GmbH, 69190 Walldorf (DE)
(72) Erfinder: Heid, Hans, 69245 Bammental (DE); Sejournet, Jérome, 78490 Grosrouvre (FR)
(74) Vertreter: Weber, Walter, Dipl.-Ing.(FH)

(56) Entgegenhaltungen:
- WO-A-92/21953
- WO-A-93/23732
- WO-A-97/19379
- DE-C- 19 605 977
- US-A- 4 738 824
- PATENT ABSTRACTS OF JAPAN vol. 012, no. 499 (P-807), 27. Dezember 1988 (1988-12-27) & JP 63 208761 A (CHIYODA SEISAKUSHO:KK), 30. August 1988 (1988-08-30)

## Beschreibung

Die Erfindung betrifft eine Vorrichtung zur Behandlung von Objekten mit einer Mehrzahl Behandlungsstationen darstellenden Behandlungsbehältern. Die Behandlungsbehälter sind dabei zur Aufnahme einer Behandlungslösung für die Objekte vorgesehen. Derartige Vorrichtungen werden insbesondere zum Färben histologischer oder zytologischer Präparate oder zum Einbetten histologisch oder zytologischer Präparate in ein Einbettmedium eingesetzt.

Färbeautomaten mit in einem kreuzgitterartigen Array angeordneten Behandlungsbädern sind beispielsweise aus der JP 63-208761, EP-B1 0 586 494, WO 93/23732 und der US-A 4,738,824 bekannt. Diese Vorrichtungen weisen eine Transportvorrichtung auf, mittels der die zu behandelnden Objekte von einer Behandlungsstation zu der programmgemäßen nächsten Behandlungsstation transportiert und in dieser nächsten Behandlungsstation für die vorgesehene Behandlungszeit abgesetzt und nachfolgend wieder entnommen werden. Die Steuerung des Programmablaufs erfolgt über eingebaute Prozessoren oder über einen PC mit angeschlossener Tastatur und Display vollautomatisch. Die Behandlungsprogramme können eingegeben und gespeichert werden; nachfolgend wird bei Bedarf das gewünschte Behandlungsprogramm ausgewählt, aufgerufen und automatisch ausgeführt. Dabei sind zum Teil auch Parallelausführungen von verschiedenen gespeicherten Behandlungsprogrammen möglich.

Zur Vermeidung von Gesundheitsbeeinträchtigungen durch entstehende Dampfprodukte der verwendeten Lösungsmittel - vorwiegend Äthanol und Xylol - weist ein Teil der bekannten Vorrichtungen eine haubenartige Geräteabdeckung auf, aus der die in den Geräten entstehenden Lösungsmitteldämpfe über Filter abgesaugt werden. Zum Teil werden zu den Vorrichtungen zusätzlich Badabdeckungen für Bäder oder Bädergruppen angeboten, die außerhalb der Betriebszeiten manuell auf die Bäder oder Bädergruppen aufgelegt werden, um unnötige Verdampfungsmengen zu verhindern.

Ein generelles Problem bei derartigen Behandlungsvorrichtungen ist die Verhinderung von Flüssigkeitsverschleppungen bei der Abfolge der einzelnen Tauchvorgänge von Bad zu Bad. Dieses ist bedeutend, da eine Verunreinigung der Bäder mit Flüssigkeiten aus anderen Bädern zur qualitativen Verschlechterung der Färbeergebnisse führt und damit auch die Reproduzierbarkeit von Färbeergebnissen beeinträchtigt. Zur Vermeidung derartiger Flüssigkeitsverschleppungen ist es aus der EP-B1 0 586 494 bekannt, zwischen zwei Reihen mit den Behandlungsbehältern eine Abtropfzone vorzusehen. Zwischen zwei aufeinanderfolgenden Bädern erfolgt der Transport des oder der zu behandelnden Objekte entlang dieser Abtropfzone. Eine derartige Abtropfzone geht jedoch zu Lasten einer kompakten Anordnung der Bäder und damit zu Lasten der Kompaktheit der gesamten Behandlungsvorrichtung, da zwischen den einzelnen Bädern ein als Abtropfzone dienender Freiraum erforderlich ist.

Die vorliegende Erfindung soll die Verunreinigung der Bäder durch Flüssigkeitsverschleppung bei der Abfolge der Tauchvorgänge von Bad zu Bad reduzieren und gleichzeitig eine kompakte Anordnung der Behandlungsbehälter gewährleisten.

Dieses Ziel wird durch eine Vorrichtung mit den Merkmalen des Anspruches 1 gelöst. Vorteilhafte Ausgestaltungen der Erfindung ergeben sich aus den Merkmalen der abhängigen Ansprüche.

Gemäß der vorliegenden Erfindung weist die Transportvorrichtung, mittels der die in Objekthaltern oder Objektträgerhaltern aufgenommenen Objekte zu den Behandlungsstationen transportiert und in den Behandlungsstationen abgesetzt werden, eine Einheit auf, die beim Transport der Objekthalter unter die Objekthalter und damit zwischen die Objekthalter und die Behandlungsbehälter bringbar ist. Diese unter die Objekthalter bringbare Einheit dient zur Aufnahme der aus den Objekten oder aus den Objekthaltern heraustropfenden Behandlungslösungen.

Die unter die Objekthalter bringbare Einheit weist vorzugsweise eine Saugunterlage auf, mit der die Objekthalter beim Transport in Kontakt gebracht werden können, beispielsweise indem die Objekthalter auf der Saugunterlage abgesetzt werden. Dadurch wird vermieden, daß Lösungsmitteltropfen aufgrund ihrer Oberflächenspannung im unteren Bereich der Objekthalter an den Objekthaltern anhaften und dadurch in das nächste Bad transportiert werden. Durch das in Kontakt bringen der Objekthalter mit der Saugunterlage werden die Lösungsmittelreste zuverlässig von der Saugunterlage aufgenommen. Beim Transport der Objekthalter zur nächsten Behandlungsstation werden die Objekthalter und die darin aufgenommenen Objekträger mit der Saugunterlage in Kontakt gehalten, wodurch die Objekträger während des Transportes fixiert gehalten werden; die Objektträger können dadurch nicht in Schwingungen geraten.

Die Einheit mit der Saugunterlage kann prinzipiell sowohl durch eine lineare Bewegung oder durch eine Schwenkbewegung unter die Objekthalter gebracht werden. Das Vorsehen einer Schwenkbewegung für das Einbringen der Einheit mit der Saugunterlage ist jedoch konstruktiv einfacher realisierbar.

Bei einer weiterhin vorteilhaften Ausgestaltung der Erfindung sind zumindest ein Teil der Behandlungsbehälter mit abnehmbaren Deckeln versehen. Die beim Transport unter die Objekthalter bringbare Einheit weist außerdem auf der der Saugunterlage abgewandten Seite eine Einrichtung zur Abnahme der Deckel auf. Dadurch kann dann vor dem Einsetzen eines Objekthalters der Deckel von dem betreffenden Behandlungsbehälter abgenommen und nach Absetzen des Objekthalters in der Behandlungsstation auf den Behälter der vorherigen Behandlungsstation abgelegt werden.

Desweiteren sind vorzugsweise auch von der Transportvorrichtung trennbare Transporteinheiten, an denen die Objekthalter aufgenommen werden, zur Abdeckung der Behandlungsbehälter ausgebildet. Es ist dann gewährleistet, daß die Behandlungsbehälter nahezu ständig abgedeckt sind und jeweils nur ein Behandlungsbehälter während der sehr kurzen Transferzeit des Transportmechanismus von einem Behandlungsbehälter zum nächsten geöffnet ist. Da die Behandlungsbehälter nahezu ständig abgedeckt sind, ist die Verdampfung der Badflüssigkeiten insbesondere im Vergleich mit Geräten, bei denen die aus nicht abgedeckten Behältern austretenden Dämpfe abgesaugt und durch die Absaugung die Verdampfung der Lösungsmittel noch angeregt wird, stark reduziert. Dadurch wird der Verbrauch an Lösungsmitteln und zugleich die Gefährdung von Gesundheit und Umwelt durch die Lösungsmitteldämpfe reduziert.

Bei einem Ausführungsbeispiel der Erfindung weist die Transportvorrichtung eine Vertikalführung auf, an der ein Schlitten mit einer Einrichtung zur Aufnahme der Objekthalter oder der Transporteinheit aufgenommen ist. An derselben Vertikalführung ist ein Träger für die unter die Objekthalter bringbare Einheit befestigt. An diesem Träger ist die unter die Objekthalter bringbare Einheit derart aufgenommen, daß letztere relativ zum Träger eine Kombination aus einer linearen, vertikalen Bewegung und einer Schwenkbewegung um eine horizontale Achse ausführen kann. Die Bewegung des Schlittens und der unter die Objekthalter bringbaren Einheit sind unabhängig von einander steuerbar. Für das Handling der Objekte bzw. der Objekthalter und das Handling der Deckel ist daher nur eine gemeinsame Horizontalführung erforderlich.

Für das Abnehmen der Deckel und/oder für das lösbare Aufnehmen der Objekthalter an der Transportvorrichtung können Magnete, vorzugsweise Elektromagnete, vorgesehen sein. Soweit Permanentmagnete zum Einsatz kommen, ist noch ein zusätzlicher Mechanismus zum Ein- und Ausschalten der Magnetkraft, beispielsweise durch Drehen der Permanentmagnete, oder zum Aufbringen einer Kraft, die größer als die Magnetkraft ist, erforderlich.

Wie bei den aus den eingangs genannten Dokumenten bekannten Färbeautomaten weist auch die erfindungsgemäße Vorrichtung vorzugsweise eine Computersteuerung für einen automatischen Ablauf abgespeicherter und ausgewählter Behandlungsprogramme auf, durch die die Objekthalter selbsttätig durch die Transportvorrichtung zu den einzelnen programmgemäß vorgesehenen Behandlungsstationen transportiert, in den Behandlungsstationen für die programmgemäße Verweilzeit abgesetzt und nach Ablauf der programmgemäßen Verweilzeit entnommen und zur nächsten programmgemäßen Behandlungsstation transportiert werden. Die Computersteuerung bewirkt dann weiterhin, daß beim Erreichen einer neuen programmgemäßen Behandlungsstation das Abdecken des zugehörigen Deckels mittels einer Einrichtung der Transportvorrichtung und nach dem Absetzen des Objekthalters in der neuen Behandlungsstation ein Ablegen des von der neuen Behandlungsstation abgenommenen Deckels auf der vorhergehenden programmgemäßen Behandlungsstation erfolgt. Außerdem bewirkt die Computersteuerung, daß nach Entnehmen eines Objekthalters eine Einheit selbsttätig unter den Objekthalter eingebracht wird und nachfolgend durch eine Relativbewegung zwischen dem Schlitten, an dem der Objekthalter aufgenommen ist, und der unter den Objekthalter bringbaren Einheit auf der Einheit abgesetzt wird. Die Computersteuerung kann dabei zum gleichzeitigen Parallelablauf verschiedener und/oder gleicher Behandlungsprogramme ausgelegt sein.

Nachfolgend werden Einzelheiten der Erfindung anhand des in den Figuren dargestellten Ausführungsbeispiels näher erläutert. Dabei zeigen:
- Figur 1: eine Ansicht der erfindungsgemäßen Vorrichtung in teilweisem Aufriß;
- Figur 2: einen Vertikalschnitt durch die Transporteinheit der erfindungsgemäßen Vorrichtung;
- Figur 3: einen Vertikalschnitt durch die Transporteinheit in einer zur Figur 2 senkrechten Ebene;
- Figuren 4a-k: Sequenzen des Funktionsablaufs beim Transport von Objektträgerhaltern von einer Behandlungsstation zur nächstfolgenden; und
- Figur 5: ein Blockschaltbild der Prozessorsteuerung.

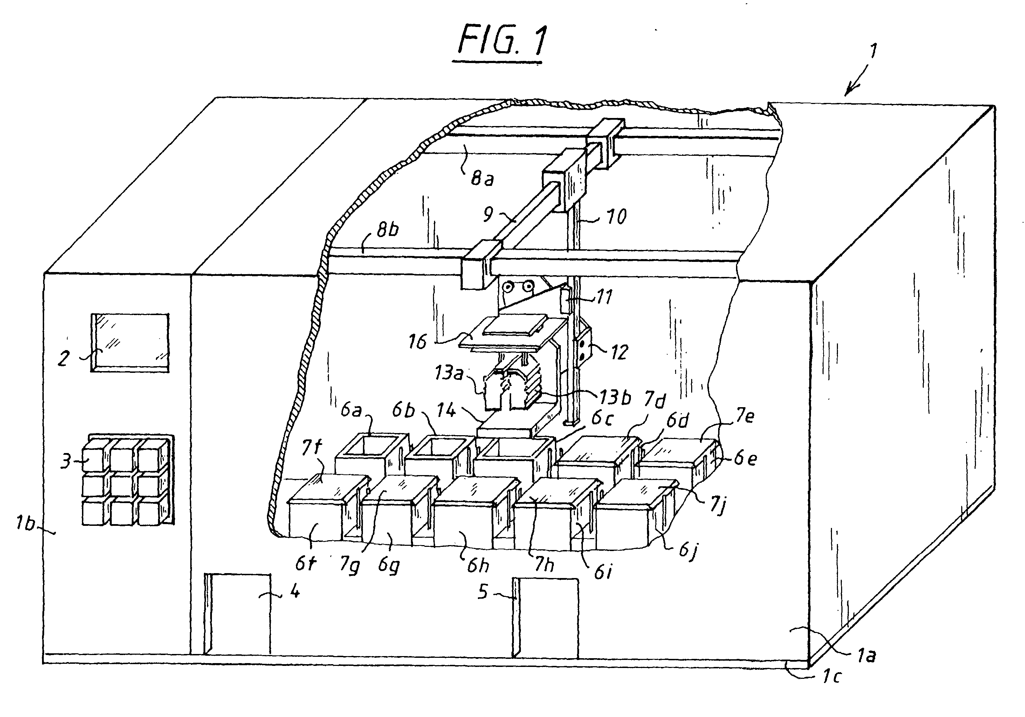

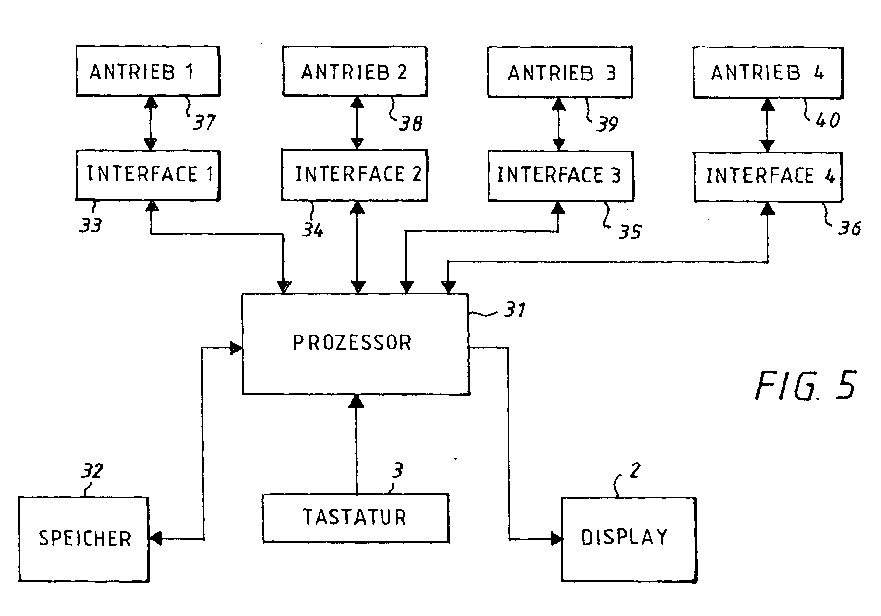

Anhand der Figur 1 ist die erfindungsgemäße Vorrichtung am Beispiel eines Färbeautomaten (1) dargestellt. Der Färbeautomat (1) umfaßt ein fest auf einer Grundplatte montiertes festes Gehäuseteil (1b) und ein von der Grundplatte abnehmbares Gehäuseteil (1a). Im festen Gehäuseteil (1b) sind der Prozessor (31) und der Speicher (32) (siehe Figur 5) zum Steuern bzw. zum Abspeichern einer größeren Anzahl von Färbeprogrammen angeordnet. An der Frontseite des festen Gehäuseteiles (1b) ist ein Anzeigefeld (2) und eine Tastatur (3) angeordnet. Die Tastatur (3) dient zur Eingabe abzuspeichernder Färbeprogramme und zum Aufruf abgespeicherter Färbeprogramme. Auf der Anzeige (2) werden die jeweils eingegebenen Daten bzw. beim Aufruf abgespeicherter Programme ebenfalls abgespeicherte Programmbemerkungen angezeigt.

Das abnehmbare Gehäuseteil (1a) weist zwei Öffnungen (4, 5) auf, die als Beschickungs- bzw. Entnahmestation dienen. Eine in die Beschickungsstation eingesetzte, als Transporteinheit dienende Korbaufhängung mit daran angehängten Objekthalterkörben wird nach Aufruf bzw. Eingabe des auszuführenden Färbeprogrammes automatisch mittels einer nachfolgend noch näher beschriebenen Transportvorrichtung aufgenommen, jeweils zu den programmgemäßen Behandlungsstationen transportiert und nach Durchführung des kompletten Färbeprogrammes in der Entnahmestation (5) abgestellt. Die Behandlungsstation sind durch kreuzgitterartig auf der Grundplatte (1c) angeordnete Behandlungsbehälter (6a - 6j), die zur Aufnahme von Behandlungslösungen bestimmt sind, realisiert. Die meisten Behandlungsbehälter (6c - 6j) sind mittels Deckel (7c - 7j) abgedeckt. Lediglich Behandlungsbehälter (6a, 6b), die Waschstationen darstellen und demzufolge lediglich mit Wasser befüllt sind, sind unabgedeckt. Auf diese Waschstationen können bei Bedarf von anderen Behandlungsstationen abzunehmende Deckel (7c - 7j) abgelegt werden.

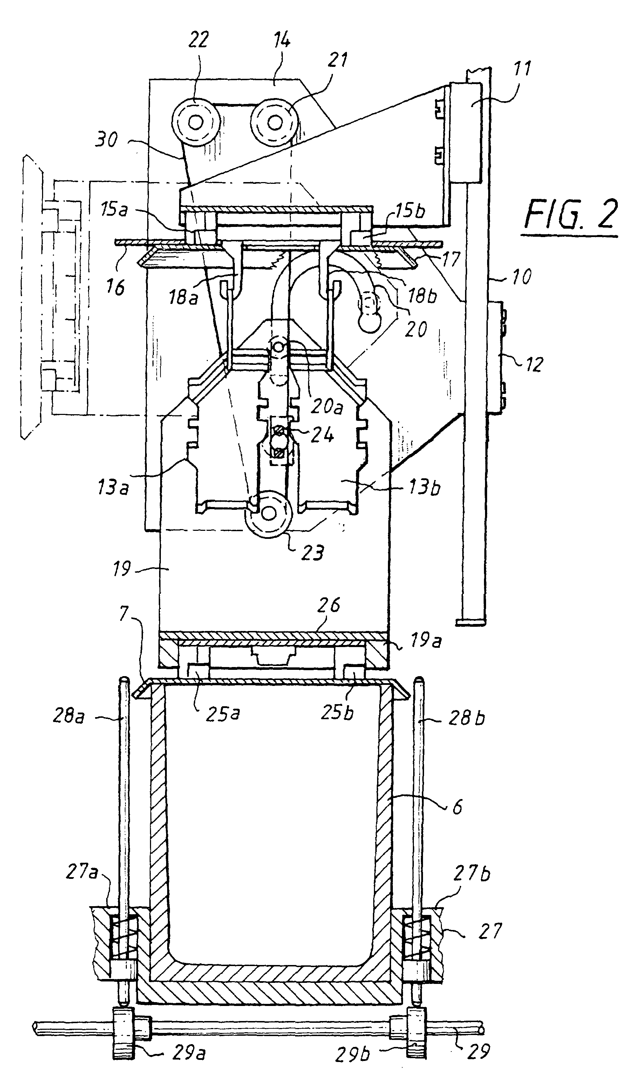

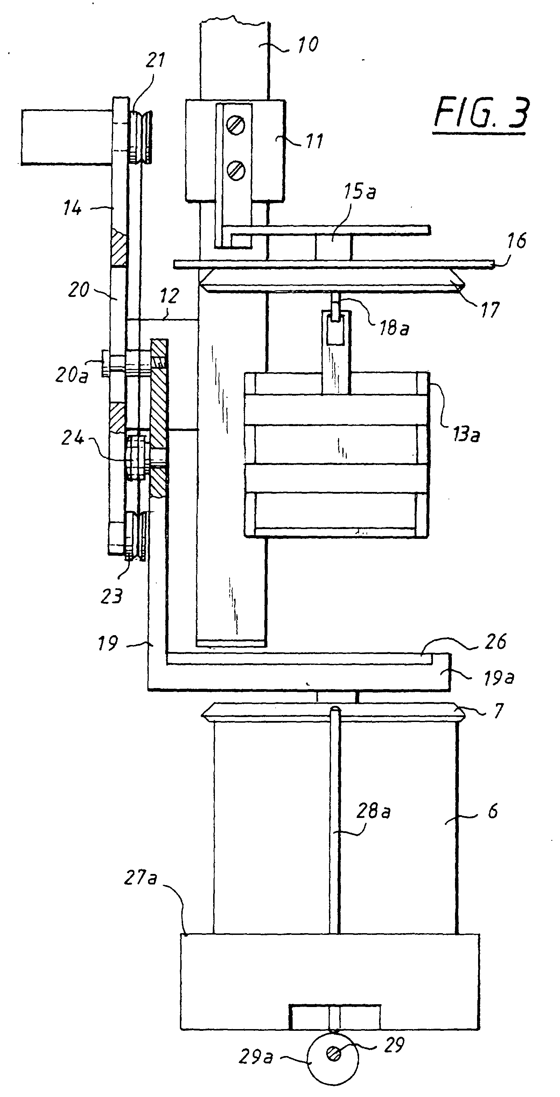

Im oberen Bereich, also oberhalb der Behandlungsgefäße (6a - 6j) sind zwei horizontal ausgerichtete Linearführungen (8a, 8b) für den Transportmechanismus vorgesehen. Die Linearführungen (8a, 8b) sind über Stützen an der Grundplatte (1c) aufgenommen. Auf den Linearführungen (8a, 8b) ist eine entlang dieser Linearführung (8a, 8b) horizontal bewegliche Traverse (9) geführt und mittels nicht dargestellter Antriebsmotoren in der Traverse (9) angetrieben. An der Traverse (9) ist wiederum horizontal, senkrecht zur Bewegungsrichtung der Traverse (9), eine Vertikalführung (10) horizontal beweglich aufgenommen. An dieser Vertikalführung (10) ist ein vertikal bewegbarer Schlitten (11) aufgenommen. An diesem Vertikalschlitten (11) sind die Objektträgerkörbe (13a, 13b) mit den zu färbenden Objekten aufgenommen. Mit einer Befestigungsklemme (12) ist an der Vertikalführung weiterhin eine Einheit (14) aufgenommen, die bei aus den Behandlungsbehältern herausgehobenen Objekthalterkörben (13a, 13b) unter die Objekthalterkörbe (13a, 13b) einschwenkbar ist. Der detaillierte Aufbau des Vertikalschlittens (11) mit den daran aufgenommenen Komponenten und der Einheit (14) wird nachfolgend noch anhand der Figuren 2 und 3 detailliert beschrieben.

Die gesamte Transportvorrichtung weist einen kranartigen Aufbau auf. Die Bewegung der Transportvorrichtung erfolgt computergesteuert über den im festen Gehäuseteil (1b) vorgesehenen Steuerungsprozessor (31) (siehe Figur 5) entsprechend dem aufgerufenen bzw. eingegebenen Färbeprogramm. Die insgesamt vier Antriebe (37-40) der Transportvorrichtung werden über vier Interface-Karten (33-36) vom Prozessor (31) angesteuert. Die drei Antriebe (37-39) für die Bewegung der Traverse (9) entlang der Horizontalführung (8a, 8b), der Vertikalführung (10) relativ zur Traverse (9) und des Schlittens (11) entlang der Vertikalführung (10) weisen Encoder auf, deren Signale über die Interface-Karten (33-35) an den Prozessor zurückgegeben werden, sodaß die exakte Position der Transportvorrichtung zu jedem Zeitpunkt genau bekannt ist. Der verbleibende Antrieb (40) für die Bewegung der weiter unten noch detaillierter beschriebenen, unter die Objekthalterkörbe (13) einschwenkbaren Einheit (19, 19a) weist drei nicht dargestellte Mikroschalter auf, bei deren Erreichen der Antrieb (40) gestoppt und ein die aktuelle Stopposition kennzeichnendes Signal an den Prozessor (31) ausgegeben wird. Außerdem sind die Positionen der Behandlungsbehälter (6a - 6j) bekannt. Die Prozessorsteuerung ist wie beispielsweise in der JP 63-208761 derart ausgelegt, daß verschiedene Färbeprogramme gleichzeitig ausgeführt werden können, indem die Transportvorrichtung nach dem Abstellen der Objekthalterkörbe (13a, 13b) in einem Behandlungsgefäß während der Behandlungszeit andere Objekthalterkörbe innerhalb der Vorrichtung transportiert. Entsprechende Algorithmen für eine einen parallelen Ablauf mehrerer Färbeprogramme gewährleistende Prozessorsteuerung sind aus der o.g. japanischen Offenlegungsschrift bekannt und werden deshalb an dieser Stelle nicht näher beschrieben.

Da mit Ausnahme der Waschstationen (6a, 6b) die Behandlungsbehälter (6c - 6n) mittels Deckel (7c - 7n) normalerweise abgedeckt sind und, wie nachfolgend noch näher beschrieben wird, auch die Objekthalterkörbe (13a - 13b) an einer deckelförmig ausgebildeten Transporteinheit angeordnet sind, so daß die Behandlungsbehälter auch während des Eintauchens der Objekthalterkörbe (13a, 13b) abgedeckt sind, treten bei der vorliegenden Vorrichtung kaum Lösungsmitteldämpfe der Behandlungslösungen auf. Eine Absaugung der Luft aus dem abnehmbaren Gehäuseteil (1a) ist deshalb nicht erforderlich. Eine Absaugung kann jedoch auch bei der erfindungsgemäßen Vorrichtung zweckmäßig sein, wenn besonders gesundheitsgefährdende oder besonders geruchsintensive Lösungsmittel zum Einsatz kommen.

Wie den beiden vergrößerten Schnittdarstellungen der Figuren 2 und 3 entnehmbar ist, ist an der Vertikalführung (10) ein Vertikalschlitten (11) geführt, an dem über einen winkelförmigen Träger zwei Elektromagnete (15a, 15b) vorgesehen sind. Die Elektromagnete (15a, 15b) dienen zum lösbaren Aufnehmen von Objektträgertransporteinheiten, von denen in der Regel mehrere mit einem Gerät mitgeliefert werden. Diese Objektträgertransporteinheit weist eine Abdeckplatte (16) auf, an der Haken (18a, 18b) zum Einhängen der Objektträgerkörbe (13a, 13b) angeordnet sind. Desweiteren weisen die Objektträgertransporteinheiten ein deckelförmiges Teil (17) auf, das von den Abmessungen identisch zu den Deckeln (7) der Behandlungsgefäße (6) ausgebildet ist. Dieses deckelförmige Teil (17) weist zwei Löcher auf, durch die die Haken (18a, 18b) hindurchgeführt sind. Gleichzeitig weist die Abdeckplatte (16) zwei Löcher auf, durch die die Magnete (15a, 15b) des Vertikalschlittens (11) hindurch auf den deckelförmigen Teil (17) geführt werden können. Die am vertikal geführten Schlitten (11) angeordneten Magnete (15a, 15b) können durch diese Löcher der Abdeckplatte (16) auf das deckelförmige Teil (17) einwirken. Durch Anheben des Schlittens (11) erfolgt dann ein Anheben der auf dem deckelförmigen Teil (17) aufliegenden Abdeckplatte (16) mit samt den daran befestigten Haken (18a, 18b) und den daran aufgenommenen Objektträgerkörben (13a, 13b). Dieser Aufbau der Transporteinheit dient zu einer weiter unten noch beschriebenen Bewegung der Objektträgerkörbe (13a, 13b) in geschlossenen Behandlungsbehältern (6). Die Objektträgerkörbe (13a, 13b) sind zum Einstecken einer Vielzahl von Objektträgern ausgebildet und weisen eine rippenartige äußere Struktur auf, damit die Behandlungslösung mit den in den Objektträgerkörben (13a, 13b) enthaltenen Objektträgern und den darauf befindlichen Objekten in Kontakt treten kann.

Mittels einer Befestigungsklemme (12) ist an der Vertikalführung (10) zusätzlich eine Trägerplatte (14) aufgenommen, die im wesentlichen unterhalb der Zeichenebene in Figur 2 angeordnet ist. Die Trägerplatte (14) weist eine bogenförmige Ausfräsung (20) auf, in der über einen Führungsstift (20a) eine Winkelplatte (19) aufgenommen ist. Desweiteren ist an der Trägerplatte (14) ein über drei Rollen (21, 22, 23) geführter Bandantrieb vorgesehen, dessen Führungsseil (30) mittels einer drehbaren Klemmung (24) an der Winkelplatte (19) befestigt ist. Eine der drei Rollen (21) ist motorisch angetrieben (Antrieb 4 in Figur 5). Bei einer Linksdrehung der Antriebsrolle (21) wird die Klemmung (24) nach oben gezogen und der Führungsstift (20a) gleitet entlang der Ausfräsung (20) mit der Folge, daß das Winkelstück (19) zunächst nach oben angehoben und aufgrund der Bogenform der Ausfräsung (20) nachfolgend in die strichpunktiert dargestellte Stellung verschwenkt wird.

Auf dem abgewinkelten Teil (19a) der Winkelplatte (19) liegt oben, auf der den Objektträgerkörben (13a, 13b) zugewandten Seite, eine offenporige, schwammartige Saugunterlage (26) auf. Diese Saugunterlage (26) ist abnehmbar und austauschbar und dient zur Aufnahme von aus den Objektträgerkörben (13a, 13b) herauslaufende Behandlungslösungen. Bei Bedarf kann die Auflage für die Saugunterlage auch wannenförmig ausgebildet sein, um beim Verschwenken des Winkels (19) ein Herauslaufen von Flüssigkeit zu vermeiden. Auf der der Saugunterlage (26) abgewandten Seite des abgewinkelten Teils (19a) des Winkels (19) sind vier weitere Elektromagnete (25a, 25b) vorgesehen, von denen in den Figuren 2 und 3 nur zwei dargestellt sind. Diese Elektromagnete (25a, 25b) dienen zur Abnahme der Deckel (7) von den Behandlungsgefäßen (6).

Beim Anfahren einer neuen Behandlungsstation, dessen Behandlungsbehälter (6) noch abgedeckt ist, wird zunächst der Winkel (19) des Schwenkteils durch Drehen der Antriebsrolle (21) nach rechts abgesenkt bis die Magnete (25a, 25b) von oben auf den Deckel (7) des Behandlungsgefäßes (6) aufgesetzt sind. In dieser abgesenkten Position spricht ein erster der bereits oben erwähnten drei Mikroschalter des Antriebs 4 an. Nachfolgend werden die Magnete (25a, 25b) eingeschaltet und durch Linksdrehen der Antriebsrolle (21) der Deckel (7) mittels des Winkels (19) angehoben und nachfolgend in die in Figur (2) strichpunktiert eingezeichnete Stellung verschwenkt. Dabei wird das Ansprechen eines zweiten Mikroschalters des Antriebs 4 überfahren, bis der die strichpunktiert dargestellte, verschwenkte Stellung des Winkels (19) kennzeichnende dritte Mikroschalter anspricht. Nach Erreichen der strichpunktierten verschwenkten Stellung fährt der Schlitten (11) mit den daran gehaltenen Objektträgerkörben (13a, 13b) vertikal nach unten bis das deckelförmige Teil (17) der Transporteinheit auf dem Behandlungsgefäß aufliegt und dieses abdeckt. Nachfolgend werden die Magnete (15a, 15b) zum Halten der Transporteinheit gelöst und demzufolge die Transportvorrichtung von der Transporteinheit getrennt. Der Schlitten (11) wird daraufhin wieder vertikal nach oben verfahren und die Transportvorrichtung fährt anschließend die Position der vorhergehenden Behandlungsstation an, um auf dem Behandlungsgefäß der vorhergehenden Behandlungsstation den an der Schwenkeinrichtung (19) der Transportvorrichtung getragenen Deckel abzulegen.

Wenn die Transporteinheit durch das deckelförmige Element (17) auf dem Behandlungsbehälter (6) aufliegt, treten die das deckelförmige Teil (17) überstehenden Ränder der Abdeckplatte (16) mit im Geräteboden angeordneten Stösseln (28a, 28b) in Kontakt, die über eine im Geräteboden verlaufende Welle (29) mit Exzentern (29a, 29b) zu Hub- und Senkbewegungen angeregt werden. Die Bewegung der Stössel (28a, 28b) wird auf die Abdeckplatte (16) und damit auf die an der Abdeckplatte (16) angehängten Objektträgerkörbe (13a, 13b) übertragen, so daß die Objektträgerkörbe (13a, 13b) bei fest auf dem Behandlungsgefäß aufliegendem Deckelteil (17) ebenfalls die Hub- und Senkbewegung ausführen. Dadurch wird eine Relativbewegung zwischen den Objektträgerkörben (13a, 13b) und der Behandlungslösung verursacht. Mit (27) ist die Bodenstruktur des Gerätes und mit (27a, 27b) sind Erhebungen der Bodenstruktur bezeichnet, durch die die Position der Behandlungsgefäße (6) festgelegt ist.

Zum Herausnehmen der Objektträgerkörbe (13a, 13b) aus einer Behandlungsstation (6) und zum Transport dieser Objektträgerkörbe zur nächsten Behandlungsstation fährt die Transportvorrichtung wieder die Position des Behandlungsgefäßes (6) an. Dadurch wird der Vertikalschlitten (11) abgesenkt, bis die am Vertikalschlitten (11) angeordneten Magnete (15a, 15b) durch die Löcher der Abdeckplatte (16) hindurch mit dem deckelförmigen Teil (17) der Transporteinheit in Kontakt treten. Nachfolgend werden die Elektromagnete (15a, 15b) wieder eingeschaltet und durch vertikales Anheben des Schlittens (11) die Transporteinheit mit samt den an der Abdeckplatte (16) angehängten Körben (13a, 13b) aus dem Behandlungsgefäß (6) herausgehoben. Nachfolgend wird die Schwenkeinheit (19) durch Rechtsdrehen der Antriebsrolle (21) wieder nach unten verschwenkt, so daß die Saugunterlage (26) zwischen den Objektträgerkörben (13a, 13b) und dem Behandlungsgefäß (6) eingeschwenkt wird. Diese Stellung ist durch den zweiten Mikroschalter gekennzeichnet, bei dessen Ansprechen die Rechtsdrehung der Antriebsrolle (21) gestoppt wird. In einem darauffolgenden Schritt wird der Schlitten (11) mit den Objektträgerkörben (13a, 13b) soweit vertikal nach unten verfahren, bis die Saugunterlage (26) mit dem unteren Rand der Objektträgerkörbe (13a, 13b) in Kontakt tritt. Durch den Kontakt zwischen der Saugunterlage (26) und den Objektträgerkörben (13a, 13b) werden die aus den Objektträgerkörben herauslaufenden Flüssigkeitsreste von der Saugunterlage (26) aufgenommen. Gleichzeitig deformiert sich die schwammartige Saugunterlage (26) und dringt aufgrund der Stegstruktur der Objekthalterkörbe (13a, 13b) teilweise in diese von unten ein und kommt dadurch auch mit den in den Objekthalterkörben aufgenommenen Objektträgern in Kontakt. Dadurch werden die Objekträger fixiert.

Durch Bewegen der Vertikalführung (10) und der Traverse (9) (siehe Figur 1) entlang der Horizontalführungen (8a, 8b) wird nun die Position der programmgemäß nachfolgenden Behandlungsstation angefahren. Als Verfahrweg wird dabei die kürzeste Streckenverbindung zur nächsten Behandlungsstation ausgewählt. Ein Verfahren entlang bestimmter Wege ist nicht erforderlich. Da die Objektträger durch die Saugunterlage fixiert sind, geraten die Objekträger beim Transport nicht in Schwingungen. Die Geräuschentwicklung ist dadurch gering.

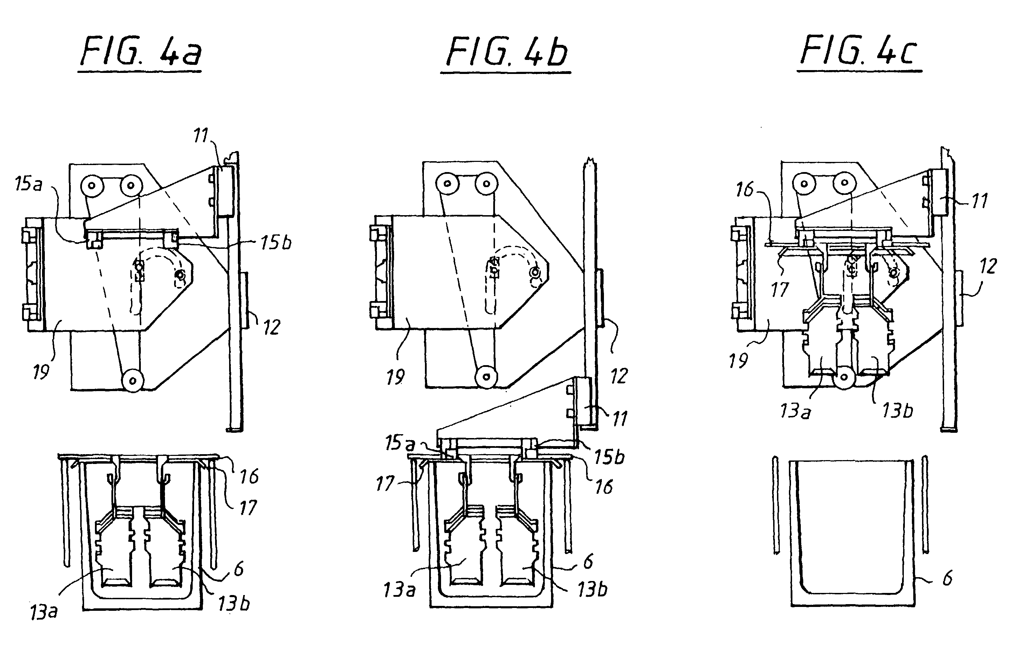

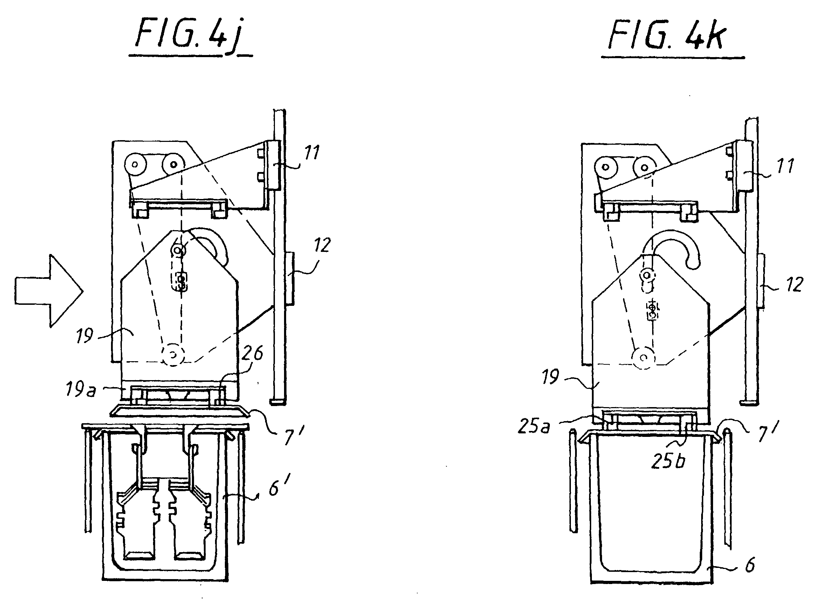

Nach Erreichen der nächsten Behandlungsstation beginnt der oben beschriebene Vorgang von neuem, d.h. die Winkelplatte (19) wird durch weiteres Rechtsdrehen der Antriebsrolle (21) bis zum Ansprechen des ersten Mikroschalters abgesenkt, der Deckel des Behandlungsgefäßes wird durch die Schwenkeinheit abgenommen und nachfolgend die Transporteinheit durch Verfahren des Schlittens (11) in das neue Behandlungsgefäß eingesetzt. Der gesamte Funktionsablauf wird nachfolgend noch einmal anhand der Figuren 4a-4k beschrieben:

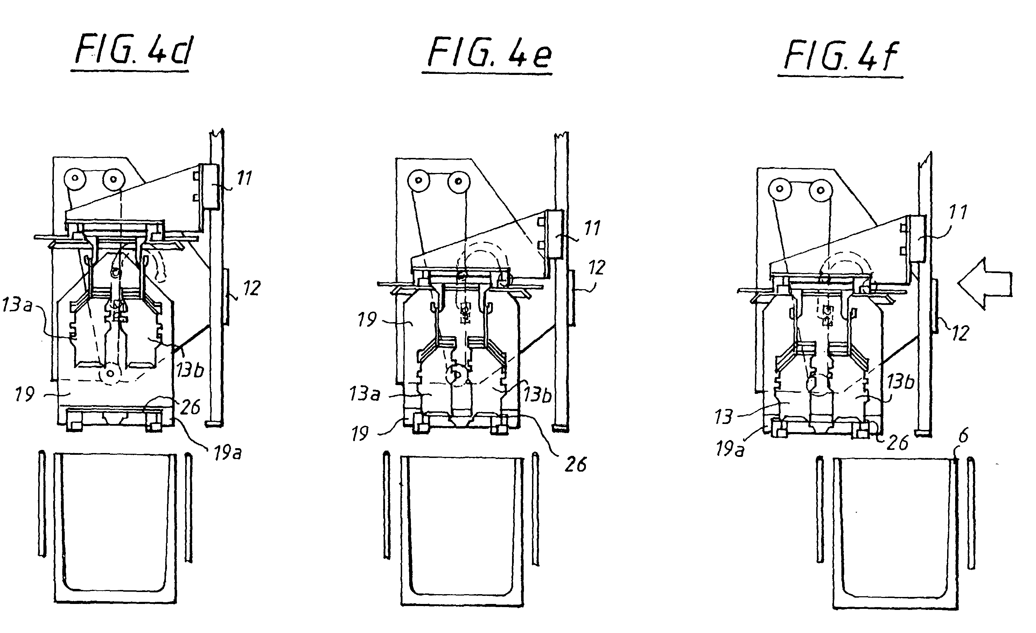

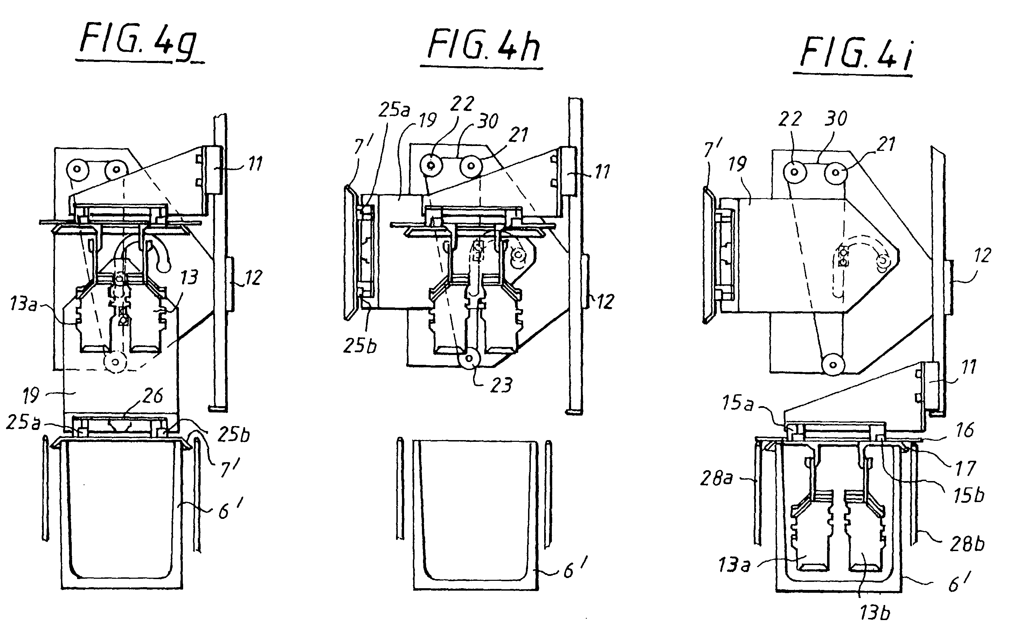

In der Figur 4a befinden sich die an der Transporteinheit (16, 17) angehängten Objektträgerkörbe (13a, 13b) in einer Behandlungsstation, und es sei angenommen, daß die programmgemäße Behandlungszeit dieser Behandlungsstation abgelaufen sei. Nachfolgend wird der Schlitten (11) abgesenkt, so daß die Magnete (15a, 15b) des Schlittens (11) mit dem deckelförmigen Teil (17) der Transporteinheit in Kontakt kommen (Figur 4b). Nach Einschalten der Elektromagnete (15a, 15b) am Schlitten (11) wird der Schlitten (11) vertikal nach oben verschoben und damit die Objektträgerkörbe (13a, 13b) aus dem Behandlungsgefäß herausgehoben (Figur 4c). Nun erfolgt das Verschwenken der Schwenkeinheit (14), wodurch die Saugunterlage (26) zwischen den Objektträgerkörben (13a, 13b) und dem Behandlungsbehälter eingeschwenkt wird (Figur 4d). Nachfolgend wird der Schlitten (11) entlang der Vertikalführung (10) nach unten verfahren, bis die Saugunterlage (26) mit den Bodenflächen der Objektträgerkörbe (13a, 13b) in Kontakt tritt (Figur 4e). In dieser Stellung, bei der die Saugunterlage (26) mit den Objektträgerkörben (13a, 13b) in Kontakt ist, wird die Position der programmäßig nachfolgenden Behandlungsstation (6') angefahren (Figur 4f). Bei Erreichen der nachfolgenden Behandlungsstation (6') wird zunächst der Schlitten (11) nach oben verfahren und danach die Schwenkeinheit (19) abgesenkt (Figur 4g) bis die Magnete (25a, 25b) den die Behandlungsstation abdeckenden Deckel (7') erreichen. Nach Einschalten der Elektromagnete (25a, 25b) wird über den Riemenantrieb (30, 21, 23) der Deckel (7') abgehoben und seitlich verschwenkt (Figur 4h). Darauffolgend wird der Schlitten (11) abgesenkt, bis das deckelförmige Teil (17) auf dem Behandlungsgefäß (6') der Behandlungsstation aufliegt (Figur 4i) und die Magnete (15a, 15b) am Schlitten (11) gelöst. Die Transporteinheit mit den darin angehängten Objektträgerkörben (13a, 13b) wird dadurch vom Schlitten (11) getrennt und der Schlitten (11) wird wieder nach oben verfahren. Aufgrund der Hub- und Senkbewegung der Stössel (28a, 28b) führt nun die Abdeckplatte (16) während der Behandlungszeit ebenfalls die Hub- und Senkbewegung der Stössel durch, wodurch eine Relativbewegung zwischen der Behandlungsflüssigkeit und den Objektträgerkörben und den darin gehaltenen Objektträgern mit den Objekten resultiert. Nach Anheben des Schlittens (11) wird die Schwenkeinheit mittels des Seilantriebes (30, 21-23) wiederum verschwenkt, so daß die Saugunterlage (26) und der an der Schwenkeinheit getragene Deckel (7') der Behandlungsstation horizontal ausgerichtet sind (Figur 4j). Nun fährt die Transporteinrichtung die Position des vorhergehenden Behandlunsgefäßes (6) an und legt durch Absenken der Schwenkeinheit und lösen der Magnete (25a, 25b) den Deckel (7') der nachfolgenden Behandlungsstation (6') auf diesen Behandlungsbehälter (6) ab. Die gesamte Transporteinrichtung ist damit wieder frei und kann entweder wieder zur nächsten Behandlungsstation fahren, um die Objektträgerkörbe aus der nächsten Behandlungsstation herauszunehmen oder kann bei Parallelablauf mehrerer Färbeprogramme eine andere Behandlungsstation anfahren, um die dort eingesetzten Objektträgerkörbe herauszunehmen. Die Entscheidung, welche der Alternativen ausgewählt wird, erfolgt durch die Prozeßsteuerung, die bei Parallelablauf mehrerer Programme durch Wahl des Startzeitpunktes und/oder durch Variation der Behandlungszeiten innerhalb zulässiger Grenzen ein Gesamtprogramm erstellt, das einen ungestörten Parallelablauf mehrerer Programme gewährleistet.

Wie sich aus dem anhand der Figuren 4a - 4k erläuterten Funktionsablauf ergibt, sind für die Schwenkeinheit (19) drei definierte Endstellungen vorgesehen, die jeweils durch das Ansprechen eines der drei Mikroschalter definiert werden. Diese drei Endstellungen sind die in den Figuren 4a bis 4c, 4h und 4i dargestellten seitlich verschwenkte Stellung, die in den Figuren 4d - 4f und 4j dargestellte Stellung mit horizontal ausgerichteter Saugunterlage (26) und die in den Figuren 4g und 4k dargestellte abgesenkte Stellung der Schwenkeinheit (19) zum Aufnehmen oder Ablegen eines Deckels.

Bei einer Weiterbildung der Erfindung kann noch ein Entleerungsprogramm vorgesehen sein, durch das automatisch unbrauchbar gewordene Behandlungslösungen abgesaugt werden. Dazu kann ein weiterer, speziell ausgebildeter Deckel vorgesehen sein, der einen bis zum Boden der Behandlungsgefäße reichenden Saugrüssel aufweist und an eine Absaugpumpe angeschlossen ist. Dieser zusätzliche Deckel ist normalerweise auf einer speziellen Parkposition abgelegt und kann bei Bedarf von den Magneten (15a, 15b) des Schlittens (11) in dieser Parkposition aufgenommen und zu der zu entleerenden Behandlungsstation gefahren werden. Nach Abnahme des die betreffende Behandlungsstation abdeckenden Deckels mittels der Schwenkeinheit wird dieser spezielle Absaugdeckel auf die Behandlungsstation aufgelegt und durch Einschalten der Pumpe die Behandlungslösung abgesaugt. Während des Absaugvorganges können andere Objektträgerkörbe in der oben beschriebenen Weise innerhalb der Vorrichtung verfahren werden, so daß das Absaugen einer Behandlungslösung vollständig in den normalen Betrieb des Gerätes integriert sein kann.

Anhand des in den Figuren dargestellten Ausführungsbeispiels wurde die Erfindung am Beispiel eines Färbeautomaten beschrieben. Die Erfindung ist jedoch grundsätzlich auch bei anderen Behandlungsautomaten für histologische oder zytologische Präparate einsetzbar, insbesondere bei sogenannten Gewebeprozessoren (Tissue Processors), die zum Einbetten eines Präparates in ein Einbettmedium dienen.

## Patentansprüche (Patentansprüche für folgende(n) Vertragsstaat(en): DE, FR, GB:)

1. Vorrichtung zur Behandlung von Objekten mit einer Mehrzahl Behandlungsstationen darstellenden Behandlungsbehältern (6, 6', 6a - 6j) und einer Transportvorrichtung (8a, 8b, 9 - 12), mittels der Objekthalter (13a, 13b) zu den Behandlungsstationen (6, 6', 6a - 6j) transportiert und in den Behandlungsstationen (6, 6', 6a - 6j) abgesetzt werden, wobei die Transportvorrichtung eine Einheit (19a, 26) aufweist, die beim Transport der Objekthalter (13a, 13b) unter die Objekthalter (13a, 13b) gebracht werden kann, und wobei eine Computersteuerung für einen automatischen Ablauf abgespeicherter und ausgewählter Behandlungsprogramme vorgesehen ist und die Objekthalter (13a, 13b) selbsttätig durch die Transportvorrichtung zu den einzelnen programmässig vorgesehenen Behandlungsstationen (6, 6a - 6j) transportiert, in den Behandlungsstationen für die programmässige Verweilzeit abgesetzt und nach Ablauf der programmässigen Verweilzeit entnommen und zur nächsten programmässigen Behandlungsstation (6') transportiert werden.

2. Vorrichtung nach Anspruch 1, wobei die Einheit (19a, 26) eine Saugunterlage (26) aufweist und wobei die Objekthalter (13a, 13b) beim Transport mit der Saugunterlage (26) in Kontakt gebracht und während des Transportes in Kontakt gehalten werden können.

3. Vorrichtung nach Anspruch 1 oder 2, wobei die Einheit (19a, 26) verschwenkbar an der Transportvorrichtung (8a, 8b, 9 - 12) angeordnet ist.

4. Vorrichtung nach Anspruch 3, wobei die Transportvorrichtung eine Vertikalführung (10) aufweist, an der eine Einrichtung (11, 15a, 15b) zur Aufnahme von Objekthaltern (13a, 13b) und die unter die Objekthalter (13a, 13b) bringbare Einheit (19a, 26) unabhängig voneinander vertikal bewegbar geführt sind.

5. Vorrichtung nach einem der Ansprüche 1-4, wobei ein Teil der Behandlungsstationen (6c - 6j) mit abnehmbaren Deckeln (7c - 7j) versehen sind und wobei die Einheit (19a, 26) eine Einrichtung (25a, 25b) zur Abnahme der Deckel (7c - 7j) aufweist.

6. Vorrichtung nach einem der Ansprüche 1-5, wobei die Transportvorrichtung (8a, 8b, 9 - 12) eine Einrichtung (15a, 15b) zur lösbaren Aufnahme von Transporteinheiten (16, 17) für die Objekthalter (13a, 13b) aufweist und wobei die Transporteinheit (16, 17) zur Abdeckung der Behandlungsstationen (6a - 6j) ausgebildet ist.

7. Vorrichtung nach Anspruch 5 oder 6, wobei die Einrichtung (25a, 25b) zur Abnahme der Deckel (7c - 7j) und und/oder die Einrichtung (15a, 15b) zur lösbaren Aufnahme der Transporteinheit (16, 17) als Magnete, vorzugsweise als Elektromagnete, ausgebildet sind.

8. Vorrichtung nach einem der Ansprüche 1 - 7, wobei die Computersteuerung beim Erreichen einer neuen Behandlungsstation (6') ein Abnehmen eines die neue Behandlungsstation (6') abdeckenden Deckels (7') mittels einer Einrichtung (19a, 25a, 25b) und nach dem Absetzen der Objekthalter (13a, 13b) in der neuen Behandlungsstation (6') ein Ablegen des von der neuen Behandlungsstation abgenommenen Deckels (7') auf der vorhergehenden programmässigen Behandlungsstation (6) bewirkt.

9. Vorrichtung nach Anspruch 8, wobei die Computersteuerung nach Entnahme der Objekthalter (13a, 13b) selbsttätig eine Einheit (19a, 26) unter die Objekthalter (13a, 13b) einbringt.

10. Vorrichtung nach Anspruch 9, wobei die Computersteuerung selbsttätig ein Absetzen der Objekthalter (13a, 13b) auf der Einheit (19a, 26) bewirkt.

11. Vorrichtung nach einem der Ansprüche 1-10, wobei die Computersteuerung zum gleichzeitigen Parallelablauf verschiedener und/oder gleicher Behandlungsprogramme ausgelegt ist.

12. Vorrichtung nach einem der Ansprüche 1-11, wobei die Behandlungsstationen (6a - 6j) als zweidimensionales, kreuzgitterartiges Array angeordnet sind und die Transportvorrichtung zur Bewegung in drei zueinander senkrechten Richtungen ausgelegt ist.

## Patentansprüche (Patentansprüche für folgende(n) Vertragsstaat(en): SE:)

1. Vorrichtung zur Behandlung von Objekten mit einer Mehrzahl Behandlungsstationen darstellenden Behandlungsbehältem (6, 6', 6a - 6j) und einer Transportvorrichtung (8a, 8b, 9 - 12), mittels der Objekthalter (13a, 13b) zu den Behandlungsstationen (6, 6', 6a - 6j) transportiert und in den Behandlungsstationen (6, 6', 6a - 6j) abgesetzt werden, wobei die Transportvorrichtung eine Einheit (19a, 26) aufweist, die beim Transport der Objekthalter (13a, 13b) unter die Objekthalter (13a, 13b) gebracht werden kann.

2. Vorrichtung nach Anspruch 1, wobei die Einheit (19a, 26) eine Saugunterlage (26) aufweist und wobei die Objekthalter (13a, 13b) beim Transport mit der Saugunterlage (26) in Kontakt gebracht und während des Transportes in Kontakt gehalten werden können.

3. Vorrichtung nach Anspruch 1 oder 2, wobei die Einheit (19a, 26) verschwenkbar an der Transportvorrichtung (8a, 8b, 9 - 12) angeordnet ist.

4. Vorrichtung nach Anspruch 3, wobei die Transportvorrichtung eine Vertikalführung (10) aufweist, an der eine Einrichtung (11, 15a, 15b) zur Aufnahme von Objekthaltem (13a, 13b) und die unter die Objekthalter (13a, 13b) bringbare Einheit (19a, 26) unabhängig voneinander vertikal bewegbar geführt sind.

5. Vorrichtung nach einem der Ansprüche 1-4, wobei ein Teil der Behandlungsstationen (6c - 6j) mit abnehmbaren Deckeln (7c - 7j) versehen sind und wobei die Einheit (19a, 26) eine Einrichtung (25a, 25b) zur Abnahme der Deckel (7c - 7j) aufweist.

6. Vorrichtung nach einem der Ansprüche 1-5, wobei die Transportvorrichtung (8a, 8b, 9 - 12) eine Einrichtung (15a, 15b) zur lösbaren Aufnahme von Transporteinheiten (16, 17) für die Objekthalter (13a, 13b) aufweist und wobei die Transporteinheit (16, 17) zur Abdeckung der Behandlungsstationen (6a - 6j) ausgebildet ist.

7. Vorrichtung nach Anspruch 5 oder 6, wobei die Einrichtung (25a, 25b) zur Abnahme der Deckel (7c - 7j) und und/oder die Einrichtung (15a, 15b) zur lösbaren Aufnahme der Transporteinheit (16, 17) als Magnete, vorzugsweise als Elektromagnete, ausgebildet sind.

8. Vorrichtung nach einem der Ansprüche 1-7, wobei eine Computersteuerung für einen automatischen Ablauf abgespeicherter und ausgewählter Behandlungsprogramme vorgesehen ist und die Objekthalter (13a, 13b) selbsttätig durch die Transportvorrichtung zu den einzelnen programmässig vorgesehenen Behandlungsstationen (6, 6a - 6j) transportiert, in den Behandlungsstationen für die programmässige Verweilzeit abgesetzt und nach Ablauf der programmässigen Verweilzeit entnommen und zur nächsten programmässigen Behandlungsstation (6') transportiert werden.

9. Vorrichtung nach Anspruch 8, wobei die Computersteuerung beim Erreichen einer neuen Behandlungsstation (6') ein Abnehmen eines die neue Behandlungsstation (6') abdeckenden Deckels (7') mittels einer Einrichtung (19a, 25a, 25b) und nach dem Absetzen der Objekthalter (13a 13b) in der neuen Behandlungsstation (6') ein Ablegen des von der neuen Behandlungsstation abgenommenen Deckels (7') auf der vorhergehenden programmässigen Behandlungsstation (6) bewirkt.

10. Vorrichtung nach Anspruch 8 oder 9, wobei die Computersteuerung nach Entnahme der Objekthalter (13a, 13b) selbsttätig eine Einheit (19a, 26) unter die Objekthalter (13a, 13b) einbringt.

11. Vorrichtung nach Anspruch 10, wobei die Computersteuerung selbsttätig ein Absetzen der Objekthalter (13a, 13b) auf der Einheit (19a, 26) bewirkt.

12. Vorrichtung nach einem der Ansprüche 8-11, wobei die Computersteuerung zum gleichzeitigen Parallelablauf verschiedener und/oder gleicher Behandlungsprogramme ausgelegt ist.

13. Vorrichtung nach einem der Ansprüche 1-12, wobei die Behandlungsstationen (6a - 6j) als zweidimensionales, kreuzgitterartiges Array angeordnet sind und die Transportvorrichtung zur Bewegung in drei zueinander senkrechten Richtungen ausgelegt ist.

## Claims (Claims for the following Contracting State(s): DE, FR, GB)

1. Apparatus for treatment of specimens containing a plurality of treatment containers (6, 6', 6a - 6j) representing treatment stations and a transport device (8a, 8b, 9 - 12), by means of which specimen holders (13a, 13b) are transported to the treatment stations (6, 6', 6a - 6j) and deposited in said treatment stations (6, 6', 6a - 6j) **characterised in that** the transport device manifests a unit (19a, 26) which can be positioned under the specimen holders (13a, 13b) when said specimen holders (13a, 13b) are transported, and **in that** a computer control has been provided for an automatic sequence of stored and selected treatment programmes and that said specimen holders (13a, 13b) are transported automatically through said transport device to said individual treatment stations (6, 6a - 6j) according to the programme, are deposited in said treatment stations for the programmed retention time and removed after the expiry of the programmed retention time and transported to the next treatment station (6') according to the programme.

2. Apparatus according to Claim 1, **characterised in that** the unit (19a, 26) manifests a suction underlay (26) and **in that** the specimen holders (13a, 13b) are brought into contact with said suction underlay (26) in transport and can be kept in contact during the transport.

3. Apparatus according to Claim 1 or 2, **characterised in that** the unit (19a, 26) is pivotably arranged on said transport device (8a, 8b, 9 - 12).

4. Apparatus according to Claim 3, **characterised in that** said transport device manifests a vertical guide (10) on which a device (11, 15a, 15b) taking up specimen holders (13a, 13b) and said unit (19a, 26) which can be positioned under said specimen holders (13a, 13b) are vertically movably guided independently of each other.

5. Apparatus according to one of the claims 1-4, **characterised in that** a portion of said treatment stations (6e - 6j) is provided with removable covers (7c - 7j) and **in that** said unit (19a, 26) manifests a device (25a, 25b) for the removal of said covers (7e - 7j).

6. Apparatus according to one of the claims 1-5, **characterised in that** said transport device (8a, 8b, 9 - 12) manifests a device (15a, 15b) that can releasably engage with said transport units (16, 17) for the specimen holders (13a, 13b) and **in that** said transport unit (16, 17) is designed to cover said treatment stations (6a - 6j).

7. Apparatus according to Claim 5 or 6, **characterised in that** said device (25a, 25b) for the removal of said covers (7c - 7j) and/or said device (15a, 15b) that can releasably engage with the transport unit (16, 17) is/are designed as magnets, preferably electromagnets.

8. Apparatus according to one of the claims 1 - 7, **characterised in that** the computer control after reaching a new treatment station (6') causes a removal of a cover (7') covering the new treatment station (6') by means of a device (19a, 25a, 25b) and after the deposition of the said specimen holders (13a, 13b) in said new treatment station (6') causes a deposit of said cover (7') removed from said new treatment station (6') onto said previous treatment station (6) according to the programme.

9. Apparatus according to Claim 8, **characterised in that** said computer control after removal of said specimen holders (13a, 13b) automatically brings a unit (19a, 26) under said specimen holders (13a, 13b).

10. Apparatus according to Claim 9, **characterised in that** said computer control automatically causes a deposition of said specimen holders (13 a, 13b) on said unit (19a, 26).

11. Apparatus according to one of the claims 1 - 10, **characterised in that** said computer control is designed for simultaneous, parallel running of different and/or identical treatment programmes.

12. Apparatus according to one of the claims 1 - 11, **characterised in that** said treatment stations (6a - 6j) are arranged as a two-dimensional, grid-like array and that said transport device is designed for movement in three directions vertical to one another.

## Claims (Claims for the following Contracting State(s): SE)

1. Apparatus for treatment of specimens containing a plurality of treatment containers (6, 6, 6a - 6j) representing treatment stations and a transport device (8a, 8b, 9 - 12), by means of which specimen holders (13a, 13b) are transported to the treatment stations (6, 6', 6a - 6j) and deposited in said treatment stations (6, 6', 6a - 6j) whereby said transport device manifests a unit (19a, 26) which can be positioned under said specimen holders (13a, 13b) when said specimen holders (13a, 13b) are transported.

2. Apparatus according to Claim 1, **characterised in that** the unit (19a, 26) manifests a suction underlay (26) and **in that** said specimen holders (13a, 13b) are brought into contact with said suction underlay (26) in transport and can be kept in contact during the transport.

3. Apparatus according to Claim 1 or 2, **characterised in that** said unit (19a, 26) is pivotably arranged on said transport device (8a, 8b, 9 - 12).

4. Apparatus according to Claim 3, **characterised in that** said transport device manifests a vertical guide (10) on which a device (11, 15a, 15b) taking up specimen holders (13a, 13b) and said unit (19a, 26) which can be positioned under the specimen holders (13a, 13b) are vertically movably guided independently of each other.

5. Apparatus according to one of the claims 1-4, **characterised in that** a portion of said treatment stations (6c - 6j) is provided with removable covers (7c - 7j) and **in that** said unit (19a, 26) manifests a device (25a, 25b) for the removal of said covers (7c - 7j).

6. Apparatus according to one of the claims 1-5, **characterised in that** said transport device (8a, 8b, 9 - 12) manifests a device (15a, 15b) that can releasably engage with said transport units (16, 17) for the specimen holders (13a, 13b) and **in that** the transport unit (16, 17) is designed to cover said treatment stations (6a - 6j).

7. Apparatus according to Claim 5 or 6, **characterised in that** said device (25a, 25b) for the removal of said covers (7c - 7j) and/or said device (15a, 15b) that can releasably engage with said transport unit (16, 17) are designed as magnets, preferably electromagnets.

8. Apparatus according to one of the claims 1 - 7, **characterised in that** a computer control has been provided for an automatic sequence of stored and selected treatment programmes and that said specimen holders (13a, 13b) are transported automatically through the transport device to said individual treatment stations (6, 6a - 6j) according to the programme, deposited in said treatment stations for the programmed retention time and removed after the expiry of the programmed retention time and transported to the next treatment station (6') according to the programme.

9. Apparatus according to Claim 8, **characterised in that** said computer control after reaching a new treatment station (6') causes a removal of a cover (7') covering said new treatment station (6') by means of a device (19a, 25a, 25b) and after the deposition of said specimen holders (13a, 13b) in new treatment station (6') causes a deposit of said cover (7') removed from said new treatment station (7') onto said previous treatment station (6) according to the programme.

10. Apparatus according to Claim 8 or 9, **characterised in that** said computer control after removal of said specimen holders (13a, 13b) automatically brings a unit (19a, 26) under said specimen holders (13a, 13b).

11. Apparatus according to Claim 10, **characterised in that** said computer control automatically causes a deposition of said specimen holders (13 a, 13b) on said unit (19a, 26).

12. Apparatus according to one of the claims 8-11, **characterised in that** said computer control is designed for simultaneous, parallel running of different and/or identical treatment programmes.

13. Apparatus according to one of the claims 1-12, **characterised in that** said treatment stations (6a - 6j) are arranged as a two-dimension, grid-like array and that said transport device is designed for movement in three directions vertical to one another.

## Revendications (Revendications pour l'(les) Etat(s) contractant(s) suivant(s): DE, FR, GB)

1. Dispositif pour le traitement d'objets avec une pluralité de récipients de traitement (6, 6', 6a - 6j) représentant des postes de traitement et un dispositif de transport (8a, 8b, 9 - 12), au moyen duquel des porte-objets (13a, 13b) sont amenés aux postes de traitement (6, 6', 6a-6j) et sont déposés dans les poste de traitement (6, 6', 6a-6j), le dispositif de transport présentant une unité (19a, 26) qui peut être amenée sous les porte-objets (13a, 13b) pendant le transport des porte-objets (13a, 13b) et une commande informatique étant prévue pour un déroulement automatique de programmes de traitement mémorisés et sélectionnés et les porte-objets (13a, 13b) étant transportés automatiquement par le dispositif de transport à chacun des postes de traitement (6, 6a - 6j), étant déposés dans les postes de traitement pour le temps de séjour programmé et à la fin de ce temps de séjour programmé étant retirés et transportés au poste de traitement (6') suivant programmé.

2. Dispositif selon la revendication 1, dans lequel l'unité (19a, 26) présente une ventouse (26) et dans lequel les porte-objets (13a, 13b) peuvent être amenés et maintenus en contact avec la ventouse (26) pendant le transport.

3. Dispositif selon la revendication 1 ou 2, dans lequel l'unité (19a, 26) est disposée de manière pivotante sur le dispositif de transport (8a, 8b, 9 - 12).

4. Dispositif selon la revendication 3, dans lequel le dispositif de transport présente un guide vertical (10) sur lequel sont guidés de manière mobile verticalement et indépendamment l'un de l'autre un dispositif (11, 15a, 15b) pour le logement de porte-objets (13a, 13b) et l'unité (19a, 26) pouvant être amenée sous les porte-objets (13a, 13b).

5. Dispositif selon l'une des revendications 1 - 4, dans lequel certains des postes de traitement (6c - 6j) sont munis de couvercles amovibles (7c, 7j) et dans lequel l'unité (19a, 26) présente un dispositif (25a, 25b) pour le retrait des couvercles (7c - 7j).

6. Dispositif selon l'une des revendications 1 à 5, dans lequel le dispositif de transport (8a, 8b, 9 - 12) présente un dispositif (15a, 15b) pour le logement amovible d'unités de transport (16, 17) pour les porte-objets (13a, 13b) et dans lequel l'unité de transport (16, 17) est réalisée pour recouvrir les postes de traitement (6a - 6j).

7. Dispositif selon la revendication 5 ou 6, dans lequel le dispositif (25a, 25b) est réalisé pour le retrait des couvercles (7c - 7j) et/ou le dispositif (15a, 15b) pour le logement amovible de l'unité de transport (16, 17) comme des aimants de préférence comme des électroaimants.

8. Dispositif selon l'une des revendications 1 à 7, dans lequel la commande par ordinateur à l'atteinte d'un nouveau poste de traitement (6') provoque un retrait d'un couvercle (7') recouvrant le nouveau poste de traitement (6') au moyen d'un dispositif (19a, 25a, 25b) et, après la dépose du porte-objets (13a, 13b) dans le nouveau poste de traitement (6'), une dépose du couvercle (7') retiré du nouveau poste de traitement sur le poste de traitement programmé précédent (6).

9. Dispositif selon la revendication 8, dans lequel la commande informatisée après le retrait des porte-objets (13a, 13b) amène automatiquement une unité (19a, 26) sous les porte-objets (13a, 13b).

10. Dispositif selon la revendication 9, dans lequel la commande informatisée provoque automatiquement une dépose des porté-objets (13a, 13b) sur l'unité (19a, 26).

11. Dispositif selon l'une des revendications 1 - 10, dans lequel la commande informatisée est conçue pour un déroulement parallèle simultané de programmes de traitement différents et/ou identiques.

12. Dispositif selon l'une des revendications 1 à 11, dans lequel les postes de traitement (6a - 6j) sont disposés comme une matrice à deux dimensions en forme de grillage et dans lequel le dispositif de transport est réalisé pour le mouvement dans trois directions perpendiculaires entre elles.

## Revendications (Revendications pour l'(les) Etat(s) contractant(s) suivant(s): SE)

1. Dispositif pour le traitement d'objets avec une pluralité de récipients de traitement (6, 6', 6a - 6j) représentant des postes de traitement et un dispositif de transport (8a, 8b, 9 - 12), au moyen duquel des porte-objets (13a, 13b) sont amenés aux postes de traitement (6, 6', 6a-6j) et sont déposés dans les poste de traitement (6, 6', 6a-6j), le dispositif de transport présentant une unité (19a, 26) qui peut être amenée sous les porte-objets (13a, 13b).

2. Dispositif selon la revendication 1, dans lequel l'unité (19a, 26) présente une ventouse (26) et dans lequel les porte-objets (13a, 13b) peuvent être amenés et maintenus en contact avec la ventouse (26) pendant le transport.

3. Dispositif selon la revendication 1 ou 2, dans lequel l'unité (19a, 26) est disposée de manière pivotante sur le dispositif de transport (8a, 8b, 9 - 12).

4. Dispositif selon la revendication 3, dans lequel le dispositif de transport présente un guide vertical (10) sur lequel sont guidés de manière mobile verticalement et indépendamment l'un de l'autre un dispositif (11, 15a, 15b) pour le logement de porte-objets (13a, 13b) et l'unité (19a, 26) pouvant être amenée sous les porte-objets (13a, 13b).

5. Dispositif selon l'une des revendications 1 - 4, dans lequel certains des postes de traitement (6c - 6j) sont munis de couvercles amovibles (7c, 7j) et dans lequel l'unité (19a, 26) présente un dispositif (25a, 25b) pour le retrait des couvercles (7c - 7j).

6. Dispositif selon l'une des revendications 1 à 5, dans lequel le dispositif de transport (8a, 8b, 9 - 12) présente un dispositif (15a, 15b) pour le logement amovible d'unités de transport (16, 17) pour les porte-objets (13a, 13b) et dans lequel l'unité de transport (16, 17) est réalisée pour recouvrir les postes de traitement (6a - 6j).

7. Dispositif selon la revendication 5 ou 6, dans lequel le dispositif (25a, 25b) est réalisé pour le retrait des couvercles (7c - 7j) et/ou le dispositif (15a, 15b) pour le logement amovible de l'unité de transport (16, 17) comme des aimants de préférence comme des électroaimants.

8. Dispositif selon l'une des revendications 1 à 7, dans lequel une commande informatique est prévue pour un déroulement automatique de programmes de traitement mémorisés et sélectionnés et les porte-objets (13a, 13b) sont transportés automatiquement par le dispositif de transport à chacun des postes de traitement (6, 6a - 6j), sont déposés dans les postes de traitement pour le temps de séjour programmé et à la fin de ce temps de séjour programmé sont retirés et transportés au poste de traitement (6') suivant programmé.

9. Dispositif selon la revendication 8, dans lequel la commande par ordinateur à l'atteinte d'un nouveau poste de traitement (6') provoque un retrait d'un couvercle (7') recouvrant le nouveau poste de traitement (6') au moyen d'un dispositif (19a, 25a, 25b) et, après la dépose du porte-objets (13a, 13b) dans le nouveau poste de traitement (6'), une dépose du couvercle (7') retiré du nouveau poste de traitement sur le poste de traitement programmé précédent (6).

10. Dispositif selon la revendication 8 ou 9, dans lequel la commande informatisée après le retrait des porte-objets (13a, 13b) amène automatiquement une unité (19a, 26) sous les porte-objets (13a, 13b).

11. Dispositif selon la revendication 10, dans lequel la commande informatisée provoque automatiquement une dépose des porte-objets (13a, 13b) sur l'unité (19a, 26).

12. Dispositif selon l'une des revendications 8 - 11, dans lequel la commande informatisée est conçue pour un déroulement parallèle simultané de programmes de traitement différents et/ou identiques.

13. Dispositif selon l'une des revendications 1 à 11, dans lequel les postes de traitement (6a - 6j) sont disposés comme une matrice à deux dimensions en forme de grillage et dans lequel le dispositif de transport est réalisé pour le mouvement dans trois directions perpendiculaires entre elles.
